(19)

Europäisches
Patentamt
European
Patent Office
Office européen
des brevets

(11) **EP 2 541 831 A1**

(12) **EUROPEAN PATENT APPLICATION**

(43) Date of publication:
**02.01.2013 Bulletin 2013/01**

(51) Int Cl.:
***H04L 9/32*** *(2006.01)*

(21) Application number: **11305839.0**

(22) Date of filing: **30.06.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Gemalto SA
92190 Meudon (FR)**

(72) Inventor: **Rhelimi, Alain
92197 Meudon (FR)**

(54) **Method for accessing a service of a service provider by providing anonymously an attribute or a set of attributes of a user**

(57)     The invention relates to a method Method for accessing a service (S) of a service provider (SP 3) by providing anonynimously an attribute or a set of attributes of a user determined and stored in an attribute provider (AP 2), comprising a step of processing pairs of public and private keys ($K_S$, $K_P$) of said user in a secure element (SE 1), each public key being used used once and for one set of attributes only for characterised in that it comprises

- receiving (S5) by the service provider from the secure element a certificate ($C_{AP}K_P$) delivered by the attribute provider, and a list ($LA[^Y_0]$) of attribute values ($A_y$) associated to random values ($Random_y$) in response to a list of attribute requests ($L[^y_0]$);

- determining (S6) by the service provider, digest codes ($Di_y$) associated to said list ($LA[^Y_0]$) of attribute values ($A_y$) and corresponding random values ($Random_y$), wherein $Di_y = SHA\text{-}2\,(Random_y, A_y)$,

- extracting data (CAL) from said certificate ($C_{AP}K_P$),

- accessing to said service (S) if said determined digest codes ($Di_y$) are included into said extracted data (CAL).

**Fig. 1**

**Description**

**FIELD OF THE INVENTION**

The present invention relates generally to anonymous and authentic attributes management and more specifically to a method for providing anonymity of a user secure element of attributes

**BACKGROUND OF THE INVENTION**

Depending on the service provider, a user or a card holder often has to prove that his profile fulfils different criteria (e.g. age, community belonging, address, status...).
One of the main current problem is to allow the user proving the attributes he has in order to access a service, for example if he is 18 years old or more, his status, address, ... while protecting his privacy, i.e without disclosing any other information on him than the one required for accessing to the service.
Known methods of the state of the art always disclose some element linked to the card, thus to the card bearer.
The RI mechanism proposed by BSI discloses card specific information. Indeed the card shares an identifier with the service provider and the card being the same one, and then identifier calculated the first time to access the service is also identical.
With a Single sign-on (SSO) mechanism, a single action of user authentication by a unique login/password can replace several authentications, i.e one login/password per access to a service. Authorization can allow a user to access all computers and systems where he has access permission, without the need to enter multiple passwords. SSO uses centralized authentication servers that all other applications and systems use for authentication purposes, and combine this with techniques to ensure that users do not actively have to enter their credentials more than once. Nevertheless user privacy is usually not considered in SSO mechanisms
The document "Security without identification transaction systems to make Big Brother obsolete" by David Chaum proposes that each service porvider may know a user by different pseudonyms which are not linkable wherein two organizations cannot combine their databases to build up a file on the user. A user can obtain a credential from one organization using one of his pseudonyms and demonstrate the possession of the credential to another service provider without revealing his first pseudonym to the second service provider. This solution has the same weakness than in RI mechanism, i.e. a same certificate at every connection to the same service provider.
Moreover most of the time the solutions are on-line or use the zero knowledge principle which is traceable.
There is then a need to provide a method for proving compliancy of a user profile stored in a secure element with the profile required by a service provider while preserving the privacy of the user.
Thereto, the present invention provides a method for accessing a service of a service provider by providing anonynimously an attribute or a set of attributes of a user determined and stored in an attribute provider, comprising a step of processing pairs of public and private keys keys $K_S$, $K_P$ of said user in a secure element, each public key being used used once and for one set of attributes only, the method comprising

- receiving by the service provider from the secure element a certificate $C_{AP}K_P$ delivered by the attribute provider, and a list of attribute values $LA[^Y_0]$ associated to random values $Random_Y$ in response to a list of attribute requests $L[^Y_0]$ ;
- determining by the service provider, digest codes $Di_Y$ associated to said list $LA[^Y_0]$ of attribute values $A_Y$ and corresponding random values $Random_Y$, wherein $Di_Y = SHA-2 (Random_Y, A_Y)$,
- extracting data CAL from said certificate $C_{AP}K_P$,
- accessing to said service if said determined digest codes $Di_Y$ are included into said extracted data CAL.

According to other aspects of the invention,

➢ the method may comprise

- sending to the attribute provider a list of attributes requests and a set of associated public keys $K_p[^N_0]$;
- determining for each public key $K_p[^N_0]$ a corresponding certificate $C_{AP}K_P$ comprising:

  - the public key $K_p[^N_0]$, and
  - data CAL consisting in:

    ■ for each requested attribute, an associated digest code $Di_x$, wherein $Di_x = SHA-2 (Random_x, A_x)$, wherein $A_x$ is the attribute value, and $Random_x$ a random value associated to the attribute value;

- sending back to the secure element said certificate $C_{AP}K_P$ and said data CAL;

➢ each public key $K_P{}^i$ may be signed by the attribute provider,
➢ the secure element may send a pseudo certificate of the public key $K_p[{}^N{}_0]$ for the attribute provider;
➢ the attribute provider may sign a batch of attribute requests and public keys Kp[N0] of the user by the secure element during spare time;
➢ an identity provider IPS may check the user identity and may sign each public key KPi;
➢ each attribute may have a Uniform Resource Locator to the Attribute Provider Server (URLAPS,), an (UUIDATR) to the attribute in the attributes provider server; a stamp date DATEATR of its update from an attribute provider server;
➢ when the service provider queries the secure element about an attribute, it may also send to the secure element a set of Uniform Resource Identifiers URI of the attributes;
➢ for each requested attributes received from the service provider, the secure element may determine an obfuscated data UUIDo to the attribute in the attribute provider;
➢ the secure element may determine for each requested attributes, a set of attribute records AR comprising:

- the Uniform Resource Identifiers of the attribute URI(A),
- the attribute value,
- the Uniform Resource Identifier of the Attribute provider server $URL_{APS}$
- the date of the attribute update $DATE_{ATR}$ and
- the obfuscated data the Attribute Provider server UUIDo;

➢ the secure element may compute a pseudo certificate CUSi, wherein CUSi=signed[KSi ](SHA-2(AR));
➢ the secure element may send the certificate CIPS(KPi) of the public key (KPi) provided by the identity provider service IPS, the pseudo certificate CUSi and the set of attributes records AR to the service provider so as said service provider cheks the authenticity of the attribute records;
➢ the secure element may operate an attribute synchronization to the Attribute Provider server using the information $DATE_{ATR}$.

Thanks to the invention, it is advantageously possible to allow the anonymity of any owner of attributes (e.g. age, height, eyes colour, gender, relationship status...). Then user tracking is difficult. An anonymous user can prove the authenticity of attributes to a service provider without providing his identity. All requested attributes are bundled and certified by the attribute provider and are bound to an anonymous/authenticated user.

Thanks to the invention, it is not necessary to be on-line as the invention can be used off-line.

The invention provides advantageously synchronization and date stamping, and allows notification of the service providers when an attribute changes.

The various aspects, features and advantages of the invention will become more fully apparent to those having ordinary skill in the art upon careful consideration of the following Detailed Description, given by way of example thereof, with the accompanying drawing described below:

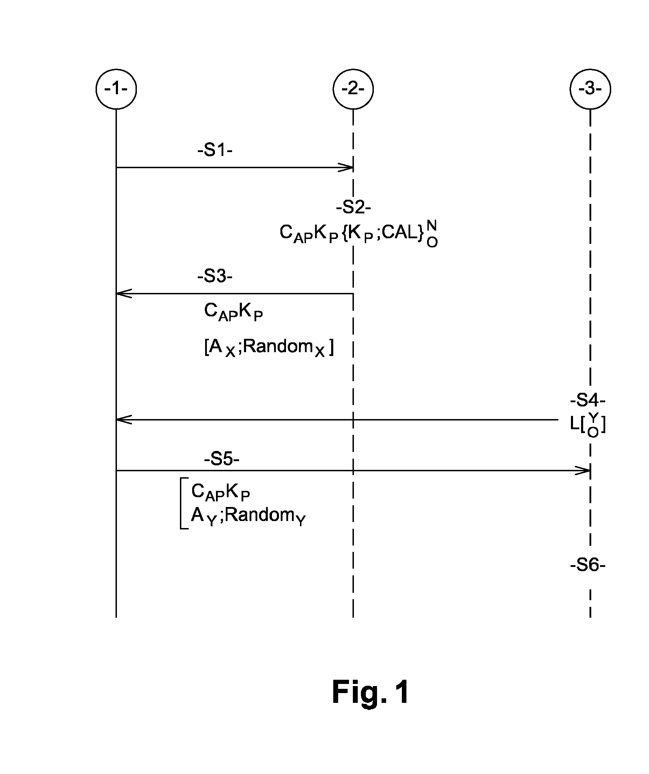

FIG.1 schematically shows a flowchart diagram according to a first embodiment of the invention.

## DETAILED DESCRIPTION

The present invention may be understood according to the detailed description provided herein.

Shown in figure 1 is a flowchart diagram according a first embodiment of the invention between a secure element 1, an attribute provider AP 2 and a service provider SP 3.

The secure element 1 has pre-computed N pairs of key $(K_S, K_P)$ wherein "$K_S$" is a secret key of the user, "$K_P$" is a public key of the user and "i" is an index of a couple of keys $(K_S{}^i, K_P{}^i)$ with $0<i<N$ . Each $K_P{}^i$ may be signed by the attribute provider AP 2.

Each $K_P{}^i$ is used once and for one set of attributes only.

In a step S1, the secure element 1 sends to the attribute provider AP 2 a list of "X" attributes requests $A[{}^X{}_0]$ and a set of key $K_P [{}^N{}_0]$. Once received, in a step S2, the attribute provider AP 2 computes a certificate "$C_{AP}K_P$" for each public key "$K_P$" from 0 to N. The certificate "$C_{AP}K_P$" comprises the the public key "$K_P$" and digest codes corresponding to the list of the "X" attributes requests $A[{}^X{}_0]$, wherein digest codes are defined as following:

■ for each attribute request A [0 to X], the corresponding digest code $Di_x = SHA-2 (Random_X, A_X)$.

Then the certificate comprises X+1 certified digest codes and form a list called "CAL" in the following specification.

In a step S3, the attribute provider AP 2 returns to the seciure element SE 1 of the user:

- the certificate "$C_{AP}K_P$"
- for each attribute request A [0 to X], the attribute $A_X$, and its corresponding $Random_x$.

In a step S4, the service provider SP 3 generates a list $L[^Y_0]$ of requested attributes and sends the list L to the secure element 1.

The list of the attributes are linked to a single attribute provider otherwise the certificate related to the said list is not valid.

In a step S5, the secure element SE 1 sends back to the service provider SP 3 the certificate "$C_{AP}K_P$" processed in the step S3, which comprises the public key "$K_P$" and digest codes corresponding to the list of the "X" attributes requests $A[^X_0]$ combined with a random value $Random_Y$, then there is a digest code per attribute and a global certificate signing all digest codes. The secure element SE 1 also sends for each attribute A [0 to Y, the attributes $A_Y$ with the corresponding $Random_Y$. This list is also called $LA[^Y_0]$ or "LA" in the following specification.

In a step S6, the service provider SP 3 cheks the certificate $C_{AP}K_P$, and extracts data from the certificate **$C_{AP}K_P$**. Extracted data consists in the list of the digest codes $Di_X$ for each attribute $A_x$ and corresponding random $Random_x$ .

The service provider SP 3 gets the $Random_y$ for each attribute $A_y$ from the list "LA" of attributes $A_y$ with the corresponding $Random_y$ recveived by the sercure element SE 1 in the step S5. Then the service provider SP 3 computes the associated digest codes $DI_y=SHA-2(A_y, Random_y)$. The secure element SE 1 then checks that all computed digest codes $DI_y$ are comprised in the list **"CAL"** of the certified digest codes. The checker has no way to deduce the attribute without the random value $Random_y$ and the list CAL.

In another embodiment the secure element SE 1 sends a pseudo certificate of the public key "$K_P^i$" for the attribute provider AP 2 if the service provider SP 3 requires the anonymous user authenticity checking. A pseudo certificate has the same structure than a standard certificate but the certificate issuer pays attention to not disclose any constants leading to the disclosure of the identity of the user or the traceability of the user.

According to another embodiment, the attribute provider AP 2 signs a batch of attribute requests and pre-computed public keys of the user by the secure element SE 1 during spare time. The secure element SE 1 uploads a batch of public keys encrypted with the public key or equivalent as a secure and authentic channel of the attribute provider AP 2.

The attribute provider AP 2 notifies the secure element SE 1 of the user when the batch is ready and encrypts the result with the public key the secure element SE 1 of the user or equivalent as a secure and authentic channel. Then the secure element SE 1 downloads the result and decrypts it using its secret key. The above exchanges of data do not require a secure channel of communication.

By doing so, the service provider SP 3 is able to easily check if the public key has been revoked in sending the certificate of **$K_P^i$** to the attribute provider AP 2. The service provider is able to easily check the authenticity of the attributes and to get a proof of this authenticity. All attributes are bundled and authenticated once per request.

Therefore the user can for example access to a service proposed by the service provider SP 3 anonymously, without disclosing his identity.The user does not need to be on-line for using such method, and it can temporally works off-line.

The method only requires a single certificate verification. It does not require real time performance on the server especially regarding to keys generation. It takes advantage of large capacity of storage of new secure elements and provides a means for authenticate a list of attributes irrespective of their combination in a super set of attributes without disclosing the non requested attributes.

The method is anonymous and non traceable or linkable.

In another embodiment, the user identity is checked by an identity provider IPS and each public key $K_P^i$ is signed by the identity provider IPS.

Optionnaly the user secure element and the service provider operates operate a SSO (Single Sign On). The user is authenticated but still anonymous.

The identity provider operates an SSO only if the secure element is certified so as to check the certificate of the secure element.

The secure element is certified ensuring a full compliancy with the policies related to an attribute container, and each attribute has:

1. an $URL_{APS}$ , a Uniform Resource Locator to the Attribute Provider Server;
2. an $UUID_{ATR}$, an identifier identifying the attribute in the attributes provider server;
3. a stamp date $DATE_{ATR}$ of its update from an attribute provider server.

# EP 2 541 831 A1

When the service provider queries the secure element about an attribute, it sends to the secure element SE 1, a set "SA" of N URI (Uniform Resource Identifier) of the attributes, wherein SA=Setof $(URI (A))_0^N$.

For each requested attributes received from the service provider, the secure element also computes an obfuscated $UUID_o$ to the attribute in the Attribute Service Provider as follow:

$$UUID_o = encrypt[K^p_{APS}] (\ UUID_{ATR} + Random)$$

The $UUID_{ATR}$ is padded with a random to make it virtually random in preventing any tracking.

1. For each requested attributes, a set of attribute records "AR" is determined in the secure element SE 1. The set AR comprises:the URI of the attribute URI(A),
2. the attribute value,
3. the URL of the Attribute provider server $URL_{APS}$,
4. date of the attribute update $DATE_{ATR}$ and
5. the obfuscated UUID in the Attribute Provider server UUIDo.

The secure element SE 1 computes a pseudo certificate $C_{US}^i$, wherein:

$$C_{US}^1 = signed[K_S^1\ ] (SHA-2(AR))$$

The secure element SE 1 sends the certificate of the public key $K_P^i$ provided by the identity provider service IPS called $C_{IPS} (\ K_P^{i)}$ in the following specification, the computed pseudo certificate $C_{us}^i$ and the set of attributes records AR to the service provider SE 2. Once received, the service provider SP 3 checks the certificate of $K_P^i$ and the certificate of the set of attribute records AR. When the certificates checking is successful then the set of attribute records is considered as authentic. In this embodiment, the service provider SP 3 may subscribe an automatic notification for each attribute using the URL of the attribute and the obfuscated $UUID_o$ as parameters.

The secure element can therefore operate an attribute synchronization to the Attribute Provider server using the information $DATE_{ATR}$.

It advantageously allows synchronization and date stamping. A notification can be send to the service provider SP 3 when an attribute has been modified: it allows automatic notification for attributes changes in guaranteeing the user anonymity. It also allows periodic synchronization between the secure element and the attributes provider servers and allows a proxy server adapting the protocol for transferring attributes between the secure element SE 1 and multiple attribute provider servers using different technologies.

Thanks to the invention, it is possible to disclose authentic attributes in guaranteeing the anonymity of the user.

If the service provider is in the circle of confidence of the user, and according to his choice, he may switch the attributes not anonymous or encrypt its identity to reveal it only with trust parties.

## Claims

1. Method for accessing a service (S) of a service provider (SP 3) by providing anonynimously an attribute or a set of attributes of a user determined and stored in an attribute provider (AP 2), comprising a step of processing pairs of public and private keys $(K_S, K_P)$ of said user in a secure element (SE 1), each public key being used used once and for one set of attributes only for **characterised in that** it comprises

   - receiving (S5) by the service provider from the secure element a certificate ($C_{AP}K_P$) delivered by the attribute provider, and a list (LA $[^Y_0]$) of attribute values ($A_Y$) associated to random values ($Random_Y$) in response to a list of attribute requests ($L[^Y_0]$);
   - determining (S6) by the service provider, digest codes ($Di_Y$) associated to said list ($LA[^Y_0]$) of attribute values ($A_Y$) and corresponding random values ($Random_Y$), wherein $Di_Y = SHA-2 (Random_Y, A_Y)$,
   - extracting data (CAL) from said certificate ($C_{AP}K_P$),
   - accessing to said service (S) if said determined digest codes ($Di_Y$) are included into said extracted data (CAL).

2. Method according to claim 1, **characterised in that** it comprises

- sending (S1) to the attribute provider (AP 2) a list of attributes requests and a set of associated public keys $(K_P[^N_0])$;
- determining (S2) for each public key $(K_p[^N_0])$ a corresponding certificate $(C_{AP}K_P)$ comprising:

- the public key $(K_p[^N_0])$, and
- data (CAL) consisting in:

■ for each requested attribute, an associated digest code $Di_X$, wherein $Di_X$=SHA-2 $(Random_X, A_X)$, wherein $A_X$ is the attribute value, and $Random_X$ a random value associated to the attribute value;

- sending back (S3) to the secure element (SE 1) said certificate $(C_{AP}K_P)$ and said data (CAL).

3. Method according to claim 1 or 2, **characterised in that** each public key $(K_P^i)$ is signed by the attribute provider (AP 2).

4. Method according to any of the previous claim, **characterised in that** the secure element (SE 1) sends a pseudo certificate of the public key $(K_p[^N_0])$ for the attribute provider.

5. Method according to any of the previous claim, **characterised in that** the attribute provider (AP 2) signs a batch of attribute requests and public keys $(K_p[^N_0])$ of the user by the secure element (SE 1) during spare time.

6. Method according to any of the previous claims, **characterised in that** an identity provider IPS checks the user identity and signs each public key $(K_P^i)$.

7. Method according any of the previous claim, charcterised in that each attribute has a Uniform Resource Locator to the Attribute Provider Server $(URL_{APS},)$, an $(UUID_{ATR})$ to the attribute in the attributes provider server; a stamp date $(DATE_{ATR})$ of its update from an attribute provider server.

8. Method according to claim 7 **characterised in that** when the service provider (SP 3) queries the secure element (SE 1) about an attribute, it also sends to the secure element (SE 1) a set of Uniform Resource Identifiers (URI) of the attributes.

9. Method according to claim 8, **characterised in that** for each requested attributes received from the service provider (SP 3), the secure element (SE 1) determines an obfuscated data $(UUID_O)$ to the attribute in the attribute provider (AP 2).

10. Method according to claim 8 to 9, **characterised in that** for the secure element (SE 1) determines for each requested attributes, a set of attribute records (AR) comprising:

- the Uniform Resource Identifiers of the attribute (URI(A),
- the attribute value,
- the Uniform Resource Identifier of the Attribute provider server $(URL_{APS})$
- the date of the attribute update $(DATE_{ATR})$ and
- the obfuscated data the Attribute Provider server (UUIDo) .

11. Method according to claim 10, **characterised in that** the secure element (SE 1) computes a pseudo certificate $(C_{US}^i)$ , wherein $C_{US}^i$=signed $[K_s^i]$ (SHA-2 (AR)).

12. Method according to claim 11, **characterised in that** the secure element (SE 1) sends the certificate $(C_{IPS}(K_P^i))$ of the public key $(K_P^i)$ provided by the identity provider service (IPS), the pseudo certificate $(C_{US}^i)$ and the set of attributes records (AR) to the service provider (SP 3) so as said service provider cheks the authenticity of the attribute records.

13. Method according to claim 10 to 12, **characterised in that** the secure element operates an attribute synchronization to the Attribute Provider server using the information $DATE_{ATR}$.

-1-  -2-  -3-

-S1-

-S2-
$C_{AP}K_P \{K_P; CAL\}_O^N$

-S3-
$C_{AP}K_P$
$[A_X; Random_X]$

-S4-
$L[_O^Y]$

-S5-
$C_{AP}K_P$
$A_Y; Random_Y$

-S6-

# Fig. 1

Europäisches
Patentamt
European
Patent Office
Office européen
des brevets

# EUROPEAN SEARCH REPORT

Application Number

EP 11 30 5839

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KIYOMOTO S ET AL: "Design of Anonymous Attribute Authentification Mechanism", IEICE TRANSACTIONS ON COMMUNICATIONS, COMMUNICATIONS SOCIETY, TOKYO, JP, vol. E92B, no. 4, 1 April 2009 (2009-04-01), pages 1112-1118, XP001547185, ISSN: 0916-8516, DOI: 10.1587/TRANSCOM.E92.B.1112 * page 1112 - page 1116 * | 1-13 | INV. H04L9/32 |
| A | US 2002/004900 A1 (PATEL BAIJU V [US]) 10 January 2002 (2002-01-10) * paragraph [0037] - paragraph [0043] * | 1-13 | |
| A | VICENTE BENJUMEA ET AL: "A First Approach to Provide Anonymity in Attribute Certificates", 26 February 2004 (2004-02-26), PUBLIC KEY CRYPTOGRAPHY Â PKC 2004; [LECTURE NOTES IN COMPUTER SCIENCE;;LNCS], SPRINGER-VERLAG, BERLIN/HEIDELBERG, PAGE(S) 402 - 415, XP019002851, ISBN: 978-3-540-21018-4 * the whole document * | 1-13 | |
| A | Gemalto: "Technical Report", , 1 December 2010 (2010-12-01), XP002660488, Retrieved from the Internet: URL:http://www.ants.interieur.gouv.fr/IMG/pdf/IAS/TR-Privacy_Preserving_Credentials_01-12-2010_v1.12.pdf [retrieved on 2011-09-30] * page 4 - page 10 * | 1-13 | |

TECHNICAL FIELDS SEARCHED (IPC)

H04L

The present search report has been drawn up for all claims

| Place of search | Date of completion of the search | Examiner |
|---|---|---|
| Munich | 4 October 2011 | Apostolescu, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 30 5839

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2011

| Patent document cited in search report | Publication date | Patent family member(s) | Publication date |
|---|---|---|---|
| US 2002004900 A1 | 10-01-2002 | NONE | |

For more details about this annex : see Official Journal of the European Patent Office, No. 12/82